**Europäisches Patentamt**

**European Patent Office**

**Office européen des brevets**

(11) Veröffentlichungsnummer: **0 395 999**

**A2**

(12) # EUROPÄISCHE PATENTANMELDUNG

(21) Anmeldenummer: **90107755.2**

(22) Anmeldetag: **24.04.90**

(51) Int. Cl.⁵: **B29B 15/12, B29C 67/14, C08L 77/00, C08L 67/02**

(30) Priorität: **04.05.89 DE 3914716**

(43) Veröffentlichungstag der Anmeldung:
**07.11.90 Patentblatt 90/45**

(84) Benannte Vertragsstaaten:
**DE FR GB IT**

(71) Anmelder: **BAYER AG**

**D-5090 Leverkusen 1 Bayerwerk(DE)**

(72) Erfinder: **Traenckner, Hans-Joachim, Dr.**
**Wedelstrasse 46**
**D-4150 Krefeld 1(DE)**
Erfinder: **Hinrichsen, Georg, Prof. Dr.**
**Devrientweg 22**
**D-1000 Berlin 45(DE)**
Erfinder: **Augustin, Günter**
**Donaustrasse 49**
**D-1000 Berlin 44(DE)**

(54) **Thermoplastische Mischungen und deren Verwendung im Schmelzepultrusionsverfahren.**

(57) Die Erfindung betrifft thermoplastische Mischungen, vorzugsweise Mischungen aus Polyarylensulfiden mit Polyamiden und/oder aliphatischen Polyestern und deren Verwendung im Schmelzepultrusionsverfahren.

EP 0 395 999 A2

**Thermoplastische Mischungen und deren Verwendung im Schmelzepultrusionsverfahren**

Die Erfindung betrifft thermoplastische Mischungen, vorzugsweise Mischungen aus Polyarylensulfiden mit Polyamiden und/oder aliphatischen Polyestern und deren Verwendung im Schmelzepultrusionsverfahren.

Schmelzepultrusionsverfahren mit Thermoplasten unter Verwendung von temperaturbeständigen Hochleistungsfasern (z.B. Glas-, Carbon-, Aramidfasern) sind bekannt (z.B. US-A 3 993 726, US-A 4 588 538, EP-A 0 056 703).

Bei Pultrusionsprozessen werden die Produktionsgeschwindigkeit und die Produktgüte maßgeblich von der Schmelzviskosität sowie den Reibungsverhältnissen in den Kalibrierdüsen zur Einstellung des Fasergehaltes bestimmt. Eine gute Imprägnierung des Fasermittels erhält man, wenn man einerseits bei hohen Temperaturen, damit also niedrigen Viskositäten und/oder andererseits bei niedrigen Abzugsgeschwindigkeiten arbeitet.

Hohe Temperaturen sind jedoch häufig ungünstig, weil diese zu einem unerwünschten thermischen Abbau der Thermoplasten führen können. Niedrige Abzugsgeschwindigkeiten sind wegen ihrer niedrigen Raum-Zeitausbeute unwirtschaftlich.

Pultrusionsverfahren bei der Schmelzeimprägnierung mit Thermoplasten benötigen infolge wesentlich höherer Viskositäten des Tränkmediums (geschmolzener Thermoplast) bedeutend größere Abziehkräfte als Pultrusionsverfahren mit Duroplasten.

Die bei derartigen Verfahren eingesetzten handelsüblichen temperaturbeständigen Fasermaterialien, z.B. Glas-, Carbon-, Aramidfaserrovings verfügen nicht über eine ausreichende Scheuerfestigkeit, um einen kontinuierlichen Imprägnierprozeß bei hohen Produktionsgeschwindigkeiten zu gewährleisten.

Bei der Herstellung von thermoplastischen Hochleistungsverbundwerkstoffen wirken sich weiterhin Unregelmäßigkeiten in der Schlichtebelegung handelsüblicher Fasermaterialien durch prozeßschädigende Schwankungen in der Abzugskraft bzw. der Produktionsgeschwindigkeit aus. Dadurch kann in den Kalibrierdüsen eine Schädigung des Faserstranges bewirkt werden. Die Produktionsgeschwindigkeit bei der Schmelzepultrusion mit Thermoplasten ist daher nach oben begrenzt, auch wenn der eigentliche Imprägnierprozeß durchaus höhere Geschwindigkeiten zulassen kann.

Bei der Herstellung im Schmelzepultrusionsverfahren aus Thermoplasten von Hochleistungsverbundwerkstoffen mit geringen Matrixgehalten im Bereich von 25 bis 40 Vol.-% können herkömmliche Gleit- und Plastifiziermittel einen negativen Einfluß insbesondere auf die Temperatur- und Chemikalienbeständigkeit und auf die mechanischen Werte der Halbzeuge haben.

Für den Schmelzepultrusionsprozeß mit Thermoplasten, vorzugsweise Polyamiden oder aliphatischen Polyestern, konnte gefunden werden, daß Abmischungen mit geringen Mengen an Polyarylensulfiden (PAS), vorzugsweise Polyphenylensulfid (PPS), die Reibungsverhältnisse in den Pultrusionswerkzeugen sowie die mechanischen Eigenschaftswerte (Biegefestigkeit, Biege-E-Modul) der Pultrudate günstig beeinflussen. Es können hohe Abzugsgeschwindigkeiten erreicht werden, ohne daß gleichzeitig die mechanischen Eigenschaften verschlechtert werden.

Gegenstand der Erfindung ist daher ein Verfahren zur Herstellung von faserverstärkten Hochleistungsverbundwerkstoffen aus Thermoplasten nach dem Schmelzepultrusionsverfahren, dadurch gekennzeichnet, daß als Thermoplasten Mischungen aus

A) 99,9 bis 80 Gew.-% eines Polyamides und/oder Polyesters und
B) 0,1 bis 20 Gew.-% Polyarylensulfid eingesetzt werden.
Bevorzugt werden als Thermoplaste Mischungen aus
A) 98 bis 90 Gew.-% eines Polyamids und/oder Polyesters und
B) 2 bis 10 Gew.-% Polyarylensulfid eingesetzt.

Die erfindungsgemäß hergestellten Hochleistungsverbundwerkstoffe können bezogen auf das Volumen 50 bis 75 Vol.-% eines üblichen Verstärkungsmaterials, z.B. Glasfasern, Carbonfasern, Aramidfasern enthalten. Vorzugsweise können sie 60 bis 70 Vol.-%. Verstärkungsmaterialien enthalten.

Ein weiterer Gegenstand der Erfindung sind thermoplastische Mischungen aus

A) 99,9 bis 80 Gew.-% eines Polyamids und/oder Polyesters und
B) 0,1 bis 20 Gew.-% eines Polyarylensulfids, vorzugsweise Mischungen aus
A) 98 bis 90 Gew.-% eines Polyamids und/oder Polyesters und
B) 2 bis 10 Gew.-% eines Polyarylensulfids.

Die erfindungsgemäß eingesetzten Thermoplaste, wie Polyamide, Polyester, vorzugsweise aliphatische Polyester, Polyarylensulfide vorzugsweise PPS sind bekannt und handelsüblich (zB. Durethan®, Pocan®, Petlon®, Ryton®, Tedur®, Tenite®).

Geeignete Polyarylensulfide (PAS), vorzugsweise Polyphenylensulfid (PPS) sind z.B. aus US-A 3 354 129 und EP-A 171 021 bekannt.

Erfindungsgemäß einsetzbare termperaturbeständige Fasermaterialien sind handelsübliche Endlosfaserrovings aus Aramid-, Glas-, Carbonfasern (z.B. Cosmostrand®, Tennax®).

Die erfindungsgemäß eingesetzten Mischungen können auf übliche Art und Weise, z.B. durch Extrusion hergestellt werden. Sie können dann zusammen mit den Fasermaterialien in bekannten Schmelzepultrusionsanlagen (z.B. US-A 3 993 726, US-A 4 588 538, EP-A 0 056 703) zu Formteilen und Halbzeugen verarbeitet werden. Die Halbzeuge enthalten unidrektional orientierte Fasern.

Die unidirektional faserverstärkten Halbzeuge lassen sich durch erneutes Aufschmelzen zu Wickel- oder Preßkörpern weiterverarbeiten.

Beispiele

1. In einer Schmelzepultrusionsanlage wurde ein Glasfaserroving mit 2400 tex (Typ R 28 EX 5, Fa. Owens Corning Fiberglas) mit der Schmelze eines niedrigviskosen Polyamids (PA 6, Fa. Bayer AG) bei einer Massetemperatur von ca 300° C zu unidirektional faserverstärkten Bändern (ca. 5 mm * 0,3 mm) verarbeitet.

Die maximal mögliche Produktionsgeschwindigkeit bei einem eingestellten Fasergehalt von ca. 68 Vol.-% lag bei 3,5 m/min.

Durch Verwendung einer erfindungsgemäßen Abmischung bestehend aus 90 Masse-% PA 6 und 10 Masse-% Polyphenylensulfid (TEDUR®, 50 Pa.s, Fa. Bayer AG) konnte die Produktionsgeschwindigkeit unter Beibehaltung der Produktgüte, ausgedrückt durch Biegefestigkeit und Biege-E-Modul, auf 5,4 m/min gesteigert werden. Die Viskosität des PPS wurde gemessen im Hochdruckkapillarviskosimeter bei 310° C mit Schergeschwindigkeit 1000 sec $^{-1}$.

Die Biegeprüfung erfolgte in Anlehnung an DIN EN 63 bei einer freien Biegelänge L = 12 mm und einer Prüfgeschwindigkeit von 1 mm/min.

| Matrix | PA 6 | PA 6/PPS (90/10) |
|---|---|---|
| Produktionsgeschwindigkeit [m/min] | 3,5 | 5,4 |
| Biegefestigkeit [MPa] | 1121 ± 18 | 1101 ± 8 |
| Biege-E-Modul [GPa] | 47,6 ± 0,9 | 48,1 ± 0,8 |

2. Wie in Beispiel 1 wurden PA 6, PPS sowie eine PA 6/PPS-Mischung bestehend aus 95 Masse-% PA 6 und 5 Masse-% PPS bei zwei Produktionsgeschwindigkeiten zu Bändern mit einem Fasergehalt von ca. 65 Vol-% verarbeitet.

Die Linearprofile auf der PA 6/PPS-Mischung zeigten bei jeweils gleicher Produktionsgeschwindigkeit einen deutlichen Festigkeitsgewinn gegenüber den glasfaserverstärkten Bändern mit reinem PA 6 bzw. PPS als Matrix.

| Matrix | Produktionsgeschwindigkeit [m/min] | Biegefestigkeit [MPa] |
|---|---|---|
| PA 6 | 1,6 | 1219 ± 24 |
| PA 6/PPS | 1,6 | 1293 ± 27 |
| PPS | 1,6 | 1134 ± 23 |
| PA 6 | 2,5 | 1169 ± 35 |
| PA 6/PPS | 2,5 | 1228 ± 53 |
| PPS | 2,5 | 1057 ± 46 |

3. Wie in Beispiel 1 wurden unidirektional faserverstärkte Bändern mit einem Fasergehalt von ca. 60 Vol.-% unter Verwendung eines Polyethylenterephthalates (Typ Tenite 7741) als Matrixmaterial hergestellt. Durch Einsatz einer erfindungsgemäßen Mischung von 580 Masse-% PETP (Polyethylenterephthalat) und 20 Masse-% PPS konnte die Produktionsgeschwindigkeit von 3,6 m/min auf 4,0 m/min unter Verbesserung der mechanischen Eigenschaftswerte gesteigert werden.

| Matrix | PETP | PETP/PPS (80/20) |
|---|---|---|
| Produktionsgeschwindigkeit [m/min] | 3,6 | 4,0 |
| Biegefestigkeit [MPa] | 1159 ± 20 | 1212 ± 14 |
| Biege-E-Modul [GPa] | 39 ± 1 | 42,5 ± 0,8 |

4. Wie in Beispiel 1 wurden Bänder mit einem Fasergehalt von ca. 64 Vol.-%. unter Verwendung von PA 66 (Fa. Bayer AG), PPS sowie einer Mischung bestehend aus 95 Masse-% PA 66 und 5 Masse-% PPS bei einer Produktionsgeschwindigkeit vom 1,5 m/min hergestellt.
Die erfindungsgemäße Abmischung FA 66/PPS zeigt auch hier einen positiven Einfluß bezüglich der mechanischen Eigenschaftswerte.

| Matrix | PA 66 | PA 66/PPS (95/5) | PPS |
|---|---|---|---|
| Biegefestigkeit [MPa] | 1273 ± 16 | 1361 ± 11 | 1123 ± 21 |
| Biege-E-Modul [GPa] | 41,9 ± 0,7 | 44,3 ± 0,5 | 36,8 ± 0,9 |

## Ansprüche

1. Verfahren zur Herstellung von faserverstärkten Hochleistungsverbundwerkstoffen aus Thermoplasten nach dem Schmelzepultrusionsverfahren, dadurch gekennzeichnet, daß als Thermoplasten Mischungen aus
A) 99,9 bis 80 Gew-% eines Polyamides und/oder Polyesters und
B) 0,1 bis 20 Gew.-% Polyarylensulfid
eingesetzt werden.
2. Thermoplastische Mischungen aus
A) 99,9 bis 80 Gew.-% eines Polyamids und/oder Polyesters und
B) 0,1 bis 20 Gew.-% eines Polyarylensulfids.
3. Verfahren nach Anspruch 1, dadurch gekennzeichnet, daß sie 50-75 Vol.-% Verstärkungsstoffe enthalten.
4. Formteile und Halbzeuge hergestellt nach Anspruch 1.